# EUROPÄISCHE PATENTSCHRIFT

(11) **EP 1 120 312 B1**
(45) Veröffentlichungstag und Bekanntmachung des Hinweises auf die Patenterteilung: **19.10.2005**
(21) Anmeldenummer: 01101476.8
(22) Anmeldetag: 24.01.2001
(51) Int. Cl.: B60R 1/06, B60Q 1/34, B60R 1/12, B60Q 1/26

(54) **Aussenrückblickspiegel für Fahrzeuge, vorzugsweise für Kraftfahrzeuge**
Exterior rear view mirror for vehicles, in particular for automotive vehicles
Rétroviseur extérieur de véhicule, en particulier de véhicule automobile

(30) Priorität: 27.01.2000 DE 20001407 U
(43) Veröffentlichungstag der Anmeldung: 01.08.2001
(73) Patentinhaber: Reitter & Schefenacker GmbH & Co. KG, 73730 Esslingen (DE)
(72) Erfinder: Apfelbeck, Robert, 94447 Plattling (DE)
(74) Vertreter: Kohl, Karl-Heinz

(56) Entgegenhaltungen:
- EP-A- 0 896 898
- EP-A- 0 941 892
- US-A- 5 823 645

## Beschreibung

Die Erfindung betrifft einen Außenrückblickspiegel für Fahrzeuge, vorzugsweise für Kraftfahrzeuge, nach dem Oberbegriff des Anspruches 1.

Es sind Außenrückblickspiegel bekannt, in deren Spiegelkopf als Leuchteneinheit eine Wiederholblinkleuchte untergebracht ist. Sie sorgt dafür, daß auch seitlich neben dem Fahrzeug befindliche Verkehrsteilnehmer durch Einschalten der Wiederholblinkleuchte zuverlässig erkennen können, daß das Fahrzeug abbiegt.

Beim gattungsgemäßen Außenrückblickspiegel (US 5 823 654 A) ist im Spiegelkopf eine Leuchteneinheit untergebracht, die eine Glühlampe aufweist, die von einem Reflektor umgeben ist und die sich mit Abstand hinter der Lichtscheibe befindet. Das vom Leuchtmittel ausgesandte Licht gelangt auf den Boden neben dem Fahrzeug.

Bei einem anderen bekannten Außenrückblickspiegel (EP 0 941 892 A) befinden sich hinter einer Lichtscheibe LEDs, die in Öffnungen eines Abdeckteiles ragen, das hinter der Lichtscheibe vorgesehen ist. Bei einer anderen Ausführung befindet sich hinter dem Leuchtmittel ein Reflektor.

Es ist schließlich ein AußenrOckblickspiegel bekannt (EP 0 896 898 A), der eine Leuchteneinheit aufweist. Sie hat eine Lichtscheibe, hinter der sich ein Reflektor befindet, der in seinem Zentrum Öffnungen aufweist, durch welche Leuchtmittel ragen.

Der Erfindung liegt die Aufgabe zugrunde, den gattungsgemäßen Außenrückblickspiegel so auszubilden, daß die Leuchteneinheit bei einfacher konstruktiver Ausbildung des Außenrückblickspiegels zuverlässig ihre Leuchtfunktion erfüllt.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel liegt das Leuchtmittel im Bereich der Öffnung, die im Reflektor vorgesehen ist. Das Leuchtmittel kann in der Öffnung des Reflektors so angeordnet sein, daß es von außen durch die Lichtscheibe nicht erkennbar ist. Der Reflektor sorgt dafür, daß die nicht unmittelbar zur Lichtscheibe gelangenden Strahlen des Leuchtmittels zur Lichtscheibe hin reflektiert werden. Die Öffnung ist in der schräg zur Lichtscheibe liegenden Wand des Reflektors vorgesehen. genden Strahlen des Leuchtmittels zur Lichtscheibe hin reflektiert werden.

Weitere Merkmale der Erfindung ergeben sich aus den weiteren Ansprüchen, der Beschreibung und den Zeichnungen.

Die Erfindung wird anhand mehrerer in den Zeichnungen dargestellter Ausführungsformen näher erläutert. Es zeigen
- Fig. 1: im Längsschnitt einen Spiegelkopf eines erfindungsgemäßen Außenrückblickspiegels,
- Fig. 2: in vergrößerter Darstellung einen Ausschnitt des Spiegelkop- fes gemäß Fig. 1,
- Fig. 3: einen Schnitt längs der Linie III-III in Fig. 1,
- Fig. 4: in einer Darstellung entsprechend Fig. 1 eine zweite Ausfüh- rungsform eines Spiegelkopfes eines erfindungsgemäßen Außenrückblickspiegels,
- Fig. 5: im Längsschnitt eine dritte Ausführungsform eines Spiegel- kopfes eines erfindungsgemäßen Außenrückblickspiegels,
- Fig. 6: einen Querschnitt durch den Spiegelkopf gemäß Fig. 5.

Der im folgenden beschriebene Außenrückblickspiegel ist für Fahrzeuge, insbesondere Kraftfahrzeuge, vorgesehen. Er hat einen Spiegelkopf 1, der in bekannter Weise mit einem (nicht dargestellten) Spiegelfuß abklappbar verbunden ist. Der Spiegelkopf 1 kann in Fahrtrichtung nach vorn und hinten abgeklappt werden. Der Spiegelkopf 1 hat ein Gehäuse 2, das vorteilhaft aus Kunststoff besteht und an seiner in Fahrtrichtung nach hinten weisenden Rückseite eine Öffnung 3 für den (nicht dargestellten) Spiegelglasträger mit dem Spiegelglas aufweist. Dieser Spiegelglasträger ist an einem Träger 4 in bekannter Weise verstellbar gelagert, der innerhalb des Gehäuses 2 untergebracht ist. Vorteilhaft ist der Spiegelglasträger motorisch verstellbar. Der entsprechende (nicht dargestellte) Antriebsmotor ist auf dem Träger 4 gelagert.

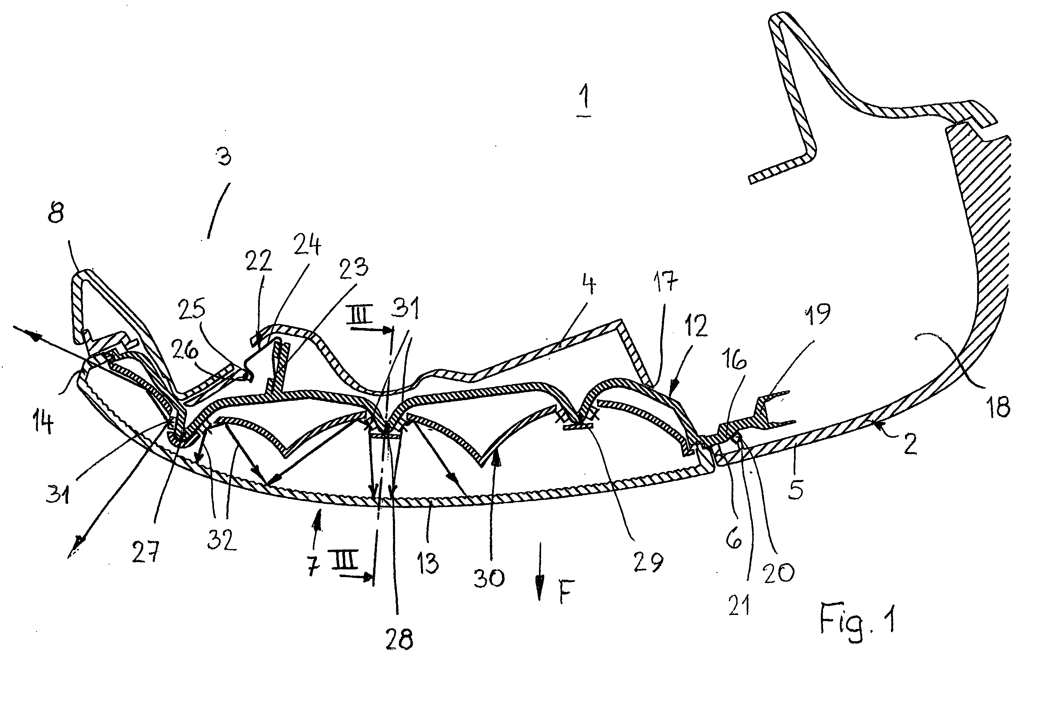

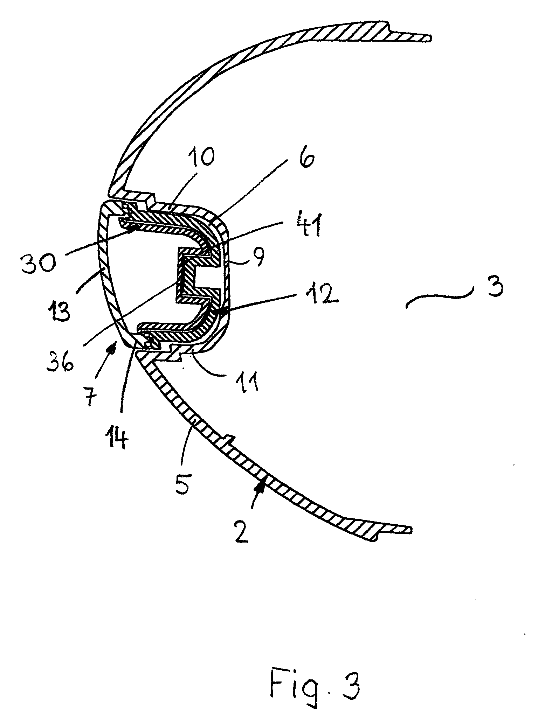

Die in Fahrtrichtung F nach vorn weisende Vorderseite 5 des Gehäuses 2 ist mit einer in Form einer Einbuchtung ausgebildeten Aufnahme 6 versehen (Fig. 1 und 3), in die eine als Blinkleuchte dienende Leuchteneinheit 7 eingesetzt ist. Wie Fig. 3 zeigt, liegt die Aufnahme 6 etwa in halber Höhe des Vorderseite 5 des Spiegelkopfgehäuses 2. Aus Fig. 1 ergibt sich, daß sich die Aufnahme 6 über mehr als die halbe Breite des Spiegelkopfes 1 bis nahe an den vom Kraftfahrzeug abgewandten äußeren Rand 8 des Gehäuses 2 erstreckt. Die Aufnahme 6, die zur Vorderseite 5 des Spiegelkopfes 1 offen ist, hat zumindest über einen Teil ihrer Länge einen Boden 9 (Fig. 3), der über Seitenwände 10, 11 in die Vorderwand 5 des Gehäuses 2 übergeht. Vorteilhaft sind der Boden 9 und die Seitenwände 10, 11 der Aufnahme 6 einstückig mit dem Gehäuse 2 ausgebildet.

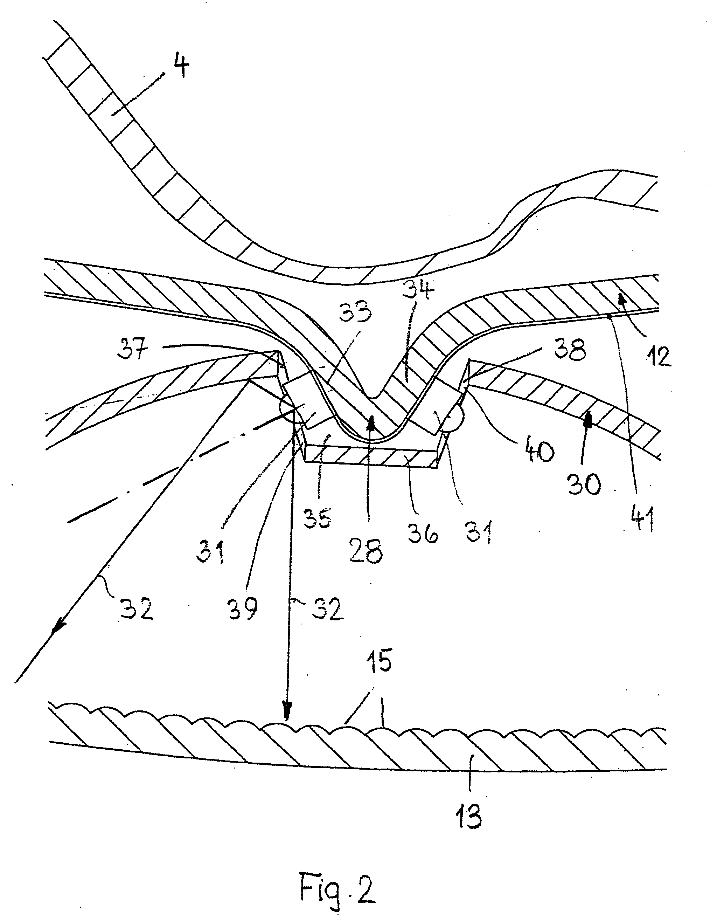

Die Leuchteneinheit 7 hat ein Leuchtengehäuse 12, das in seiner Umrißform etwa an die Querschnittsausbildung der Aufnahme 6 angepaßt ist. Das Leuchtengehäuse 12 ist auf seiner der Vorderwand 5 des Gehäuses 2 zugewandten Seite durch eine Lichtscheibe 13 geschlossen. Ihr Rand 14 ist nach innen in Richtung auf die Aufnahme 6 abgewinkelt. Die Lichtscheibe 13 besteht aus durchsichtigem Material und kann innenseitig mit Linsen 15 (Fig. 2) versehen sein.

Mit ihrem abgewinkelten, umlaufenden Rand 14 ist die Lichtscheibe 13 am Rand des Leuchtengehäuses 12 befestigt, beispielsweise mit ihm verschweißt. Die Lichtscheibe 13 und das Leuchtengehäuse 12 bestehen vorteilhaft aus Kunststoff.

Das Leuchtengehäuse 12 ragt mit einem Ansatz 16 (Fig. 1) durch eine Öffnung 17 in der Seitenwand der Aufnahme 6 und dem Träger 4 in den vom Gehäuse 2 umschlossenen Innenraum 18 des Spiegelkopfes 1. Der Ansatz 16 ist an der dem Spiegelfuß zugewandten Schmalseite des langgestreckten Leuchtengehäuses 12 vorgesehen und vorzugsweise einstückig mit ihm ausgebildet. Am Ansatz 16 ist ein Stecker 19 vorgesehen, über den die Leuchteneinheit 7 mit dem notwendigen Strom versorgt wird. Der Ansatz 16 liegt an einer Dichtung 20 an, die an der Innenseite des Gehäuses 2 vorgesehen und vorzugsweise auf einer von der Gehäuseinnenseite abstehenden Rippe 21 angeordnet ist.

Nahe dem dem Ansatz 16 gegenüberliegenden Ende ist das Leuchtengehäuse 12 über eine Clipsverbindung 22 lösbar in der Aufnahme 6 gehalten. Das Leuchtengehäuse 12 weist hierzu an seiner dem Träger 4 zugewandten Rückseite einen Ansatz 23 auf, der vorzugsweise einstückig mit dem Leuchtengehäuse 12 ausgebildet und an dem das eine Ende einer Clipsfeder 24 befestigt ist. Das andere Ende 25 der Clipsfeder 24 ist hakenförmig ausgebildet und übergreift in der Einbaulage der Leuchteneinheit 7 unter elastischer Verformung einen hakenförmigen Ansatz 26, der am Boden 9 der Aufnahme 6 vorgesehen ist.

Das Leuchtengehäuse 12 ist im Längsschnitt gemäß Fig. 1 so ausgebildet, daß es mehrere, im Ausführungsbeispiel drei Vorsprünge 27 bis 29 aufweist, die im Querschnitt V-förmig ausgebildet und durch eine entsprechende Formgebung des Leuchtengehäuses 12 gebildet sind. Zwischen dem Leuchtengehäuse 12 und der Lichtscheibe 13 befindet sich ein Reflektor 30, der das von Leuchtmitteln 31 ausgesandte Licht zur Lichtscheibe 13 reflektiert. In Fig. 1 sind beispielhaft die Strahlen 32 der Leuchtmittel 31 dargestellt. Die Leuchtmittel 31 sind am Leuchtengehäuse 12 gehalten und werden vorteilhaft durch LEDs gebildet.

Im folgenden wird die Anordnung der Leuchtmittel 31 anhand von Fig. 2 näher erläutert. Die LEDs 31 sind an den beiden spitzwinklig zueinander liegenden Seiten 33, 34 des Vorsprunges 28 befestigt. Im Bereich des Vorsprunges 28 hat der Reflektor 30 eine Vertiefung 35, die durch einen Boden 36 und Seitenwände 37, 38 begrenzt ist. In den Seitenwänden 37, 38, die mit Abstand vor den Seiten 33, 34 des Vorsprunges 28 liegen, befinden sich Öffnungen 39, 40, durch welche die Leuchtmittel 31 teilweise ragen. Der Boden 36 der Vertiefung 35 befindet sich mit geringem Abstand vor dem Vorsprung 28 und deckt diesen gegen die Lichtscheibe 13 ab. Der Boden 36 bildet somit einen Sichtschutz, der verhindert, daß der Vorsprung 28 des Leuchtengehäuses 12 von außen durch die Lichtscheibe 13 erkennbar ist.

Wie Fig. 2 zeigt, wird ein Teil der von den LEDs 31 ausgehenden Strahlen 32 direkt zur Lichtscheibe 13 gesandt. Ein anderer Teil der Strahlen 32 trifft zunächst auf den Reflektor 30 und wird von ihm zur Lichtscheibe 13 reflektiert.

Im Bereich der anderen Vorsprünge 27, 29 des Leuchtengehäuses 12 ist der Reflektor 30 gleich ausgebildet, wie anhand von Fig. 2 beschrieben worden ist.

Die Stromzuführung vom Stecker 19 zu den LEDs 31 erfolgt über eine Leiterfolie 41, die auf der dem Reflektor 30 zugewandten Seite des Leuchtengehäuses 12 befestigt ist und sich auch über die Vorsprünge 27 bis 29 erstreckt.

Da das Leuchtengehäuse 12 mehrere, über die Länge der Leuchteneinheit 7 verteilt angeordnete Leuchtmittel 31 aufweist, wird die Lichtscheibe 13 gleichmäßig ausgeleuchtet. Im Hinblick auf die Blinkfunktion reicht es aus, wenn das Leuchtengehäuse 12 lediglich im Bereich des Vorsprunges 27, der nahe dem vom Kraftfahrzeug abgewandten Ende 8 des Spiegelkopfes 1 vorgesehen ist, mit einem Leuchtmittel 31 versehen ist. Wie Fig. 1 zeigt, werden die vom äußeren Leuchtmittel 31 ausgehenden Strahlen in Fahrtrichtung F schräg nach vorn bis schräg nach hinten abgestrahlt. Dadurch kann die Blinkleuchte, wenn sie vom Fahrer des Kraftfahrzeuges betätigt wird, von anderen Verkehrsteilnehmern sicher erkannt werden, insbesondere von solchen Verkehrsteilnehmern, die sich im Bereich neben dem Kraftfahrzeug aufhalten.

Der Boden 36 der Vertiefungen 35 des Reflektors 30 verhindert auch, daß die Leiterfolie 41 durch die Lichtscheibe 13 hindurch sichtbar ist, denn er deckt die Leiterfolie im Bereich der Vorsprünge 27 bis 29 ab.

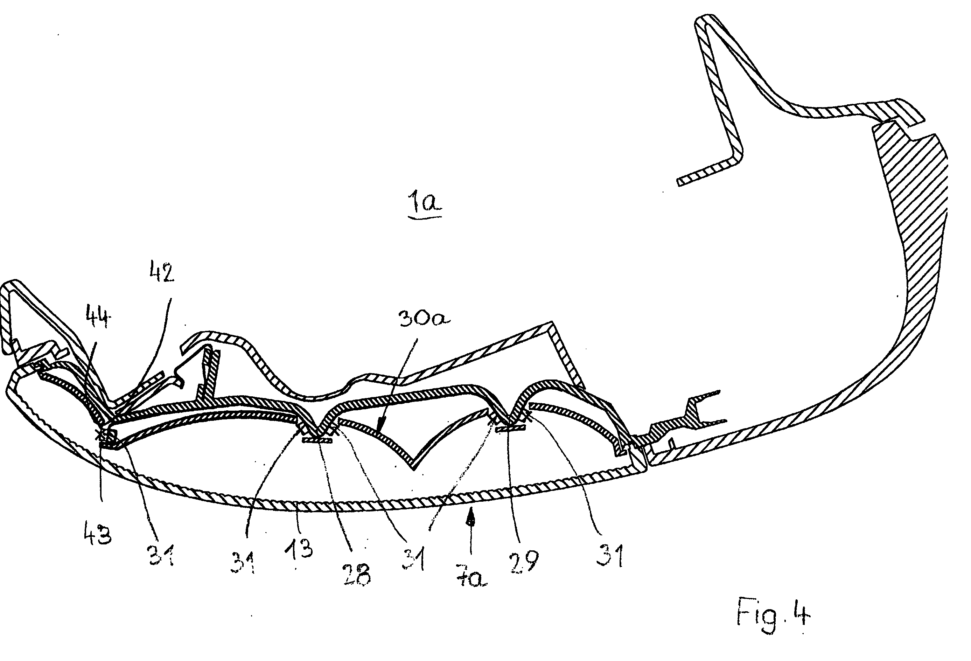

Fig. 4 zeigt eine Ausführungsform, bei der der Reflektor 30a anstelle des bei der vorigen Ausführungsform vorgesehenen, im Querschnitt V-förmigen Vorsprunges 27 eine Abwinkelung 42 aufweist. Sie hat eine quer zur Lichtscheibe 13 sich erstreckende Wand 43, in der sich eine Öffnung 44 für das Leuchtmittel 31 befindet. Es ist vorteilhaft eine LED, die in der Öffnung 44 liegt und deren Strahlen durch die Lichtscheibe 13 seitlich nach außen fallen. In Richtung auf die Lichtscheibe 13 wird das Leuchtmittel 31 durch einen Teil des Reflektors 30a abgedeckt, so daß die vom Leuchtmittel ausgehenden Strahlen hauptsächlich seitlich nach außen treten. Im übrigen ist der Spiegelkopf 1 a gleich ausgebildet wie beim vorigen Ausführungsbeispiel. Die Ausführungsform nach Fig. 4 zeichnet sich durch ihre konstruktiv einfache Ausbildung aus. Während beim Ausführungsbeispiel nach den Fig. 1 bis 3 an jedem Vorsprung 27 bis 29 zwei Leuchtmittel 31 vorgesehen sind, sind beim Spiegelkopf 1a nach Fig. 4 nur an den Vorsprüngen 28, 29 jeweils zwei Leuchtmittel 31 angeordnet, während am vom Kraftfahrzeug abgewandten Endbereich der Leuchteneinheit 7a nur ein Leuchtmittel 31 vorhanden ist.

Da die Leiterfolie 41 flexibel ausgebildet ist, läßt sie sich einfach auf unterschiedlichst ausgestaltete Leuchtengehäuse aufbringen. Selbstverständlich können die Leuchtmittel 31 auch auf andere Weise mit dem notwendigen Strom versorgt werden. So kann anstelle der Leiterfolie 41 beispielsweise auch ein MID(moulded interconnected device)-Teil verwendet werden, auf das die LEDs 31 aufgelötet sind. Eine weitere Möglichkeit besteht darin, zur Befestigung und Kontaktierung der LEDs 31 die bekannte Snap-LED-Technik einzusetzen.

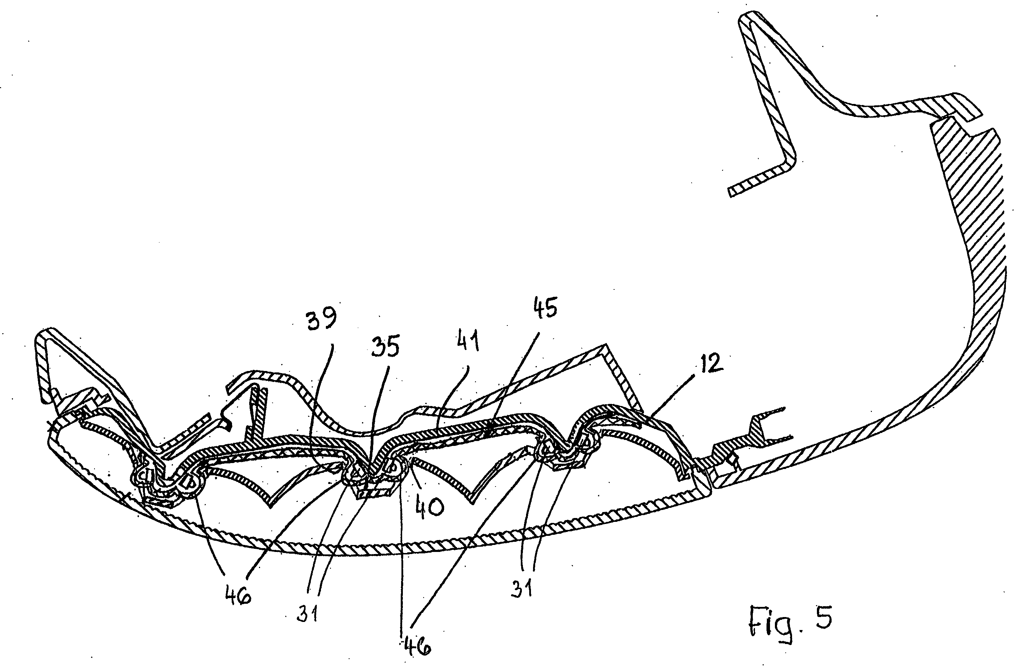

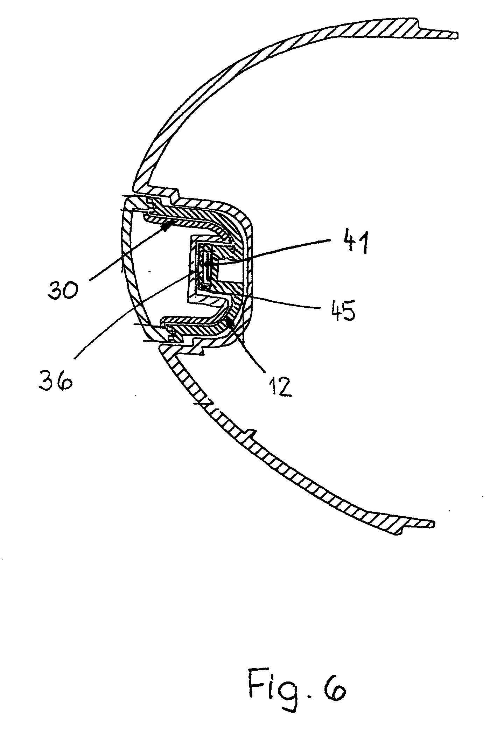

Bei der Ausführungsform nach den Fig. 5 und 6 liegt die Leiterfolie 41 unterhalb einer Abdeckung 45, die am Leuchtengehäuse 12 befestigt ist. Durch die Abdeckung 45 ist die Leiterfolie 41 zuverlässig gegen Verschmutzung, Korrosion und dergleichen geschützt. Die Abdekkung 45 hat, wie die Fig. 5 und 6 zeigen, etwa gleichen Querschnittsverlauf wie das Leuchtengehäuse 12. Im Bereich der Leuchtmittel 31 ist die Abdeckung 45 jeweils mit einer Ausformung 46 versehen, die bis in die Öffnungen 39, 40 der Vertiefungen 35 des Reflektors 30 reichen. Dadurch liegen auch die Leuchtmittel 31 geschützt unter der Abdeckung 45. Sie ist zumindest im Bereich der Ausformungen 46 lichtdurchlässig. Vorzugsweise besteht die gesamte Abdeckung 45 aus glasklarem Kunststoff. Im übrigen ist der Spiegelkopf gleich ausgebildet wie das Ausführungsbeispiel nach den Fig. 1 bis 3.

Auch bei der Ausführungsform nach Fig. 4 kann die Abdeckung 45 vorgesehen sein, um die Leiterfolie 41 und die Leuchtmittel 31 zu schützen.

Die Abdeckung 45 wird am Leuchtengehäuse 12 vorzugsweise verschweißt, so daß die Leiterfolie 41 mit den Leuchtmitteln 31 zuverlässig abgedichtet ist.

Die Leuchteneinheit 7, 7a ist eine geschlossene Baueinheit, die sich einfach in die Aufnahme 6 des Spiegelkopfgehäuses 2 einsetzen läßt. Aufgrund der Clipsverbindung 22 kann die Leuchteneinheit 7, 7a im Bedarfsfall einfach ausgewechselt werden. Die Zahl der Leuchtmittel 31 kann je nach Größe der Leuchteneinheit 7, 7a variieren. Sie selbst kann die unterschiedlichste Formgebung haben, je nach Einsatzfall.

## Patentansprüche

1. Außenrückblickspiegel für Fahrzeuge, vorzugsweise für Kraftfahrzeuge, mit einem Gehäuse (2), das wenigstens eine Leuchteneinheit (7, 7a) aufnimmt, die mit mindestens einem Leuchtmittel (31) und mindestens einem Reflektor (30, 30a) versehen ist, der wenigstens eine Öffnung (39, 40, 44) aufweist, in deren Bereich das Leuchtmittel (31) liegt, dessen Strahlen (32) durch eine Lichtscheibe (13) nach außen treten,
**dadurch gekennzeichnet, daß** der Reflektor (30, 30a) zwischen dem Leuchtmittel (31) und der Lichtscheibe (13) liegt, und daß die Öffnung (39, 40, 44) in einer quer zur Lichtscheibe (13) sich erstreckenden Wand (37, 38, 43) des Reflektors (30, 30a) liegt.

2. Außenrückblickspiegel nach Anspruch 1,
**dadurch gekennzeichnet, daß** das Leuchtmittel (31) an einem Leuchtengehäuse (12) angeordnet ist.

3. Außenrückblickspiegel nach Anspruch 2.
**dadurch gekennzeichnet, daß** das Leuchtengehäuse (12) mit der Lichtscheibe (13) die geschlossene Leuchteneinheit (7, 7a) begrenzt.

4. Außenrückblickspiegel nach Anspruch 2 oder 3,
**dadurch gekennzeichnet, daß** das Leuchtengehäuse (12) wenigstens einen in Richtung auf die Lichtscheibe (13) gerichteten und vorteilhaft im Querschnitt V-förmigen Vorsprung (27 bis 29) aufweist.

5. Außenrückblickspiegel nach Anspruch 4,
**dadurch gekennzeichnet, daß** der Vorsprung (27 bis 29) in wenigstens eine Vertiefung (35) des Reflektors (30, 30a) ragt.

6. Außenrückblickspiegel nach Anspruch 5,
**dadurch gekennzeichnet, daß** die Vertiefung (35) die Öffnung (39, 40) aufweist.

7. Außenrückblickspiegel nach Anspruch 5 oder 6,
**dadurch gekennzeichnet, daß** die die Öffnung (39, 40, 44) aufweisende Wand (37, 38, 43) eine Seitenwand der Vertiefung (35) ist.

8. Außenrückblickspiegel nach einem der Ansprüche 5 bis 7,
**dadurch gekennzeichnet, daß** der Vorsprung (27 bis 29) des Reflektors (30, 30a) durch einen Boden (36) der Vertiefung (35) gegen die Lichtscheibe (13) abgedeckt ist.

9. Außenrückblickspiegel nach einem der Ansprüche 4 bis 8,
**dadurch gekennzeichnet, daß** der Vorsprung (27 bis 29) zwei winklig zueinander liegende Seitenwände (33, 34) aufweist, auf denen jeweils ein Leuchtmittel (31) sitzt.

10. Außenrückblickspiegel nach einem der Ansprüche 1 bis 9,
**dadurch gekennzeichnet, daß** die die Öffnung (44) aufweisende Wand (43) am vom Kraftfahrzeug entfernten Endbereich des Reflektors (30a) vorgesehen ist.

11. Außenrückblickspiegel nach einem der Ansprüche 1 bis 10,
**dadurch gekennzeichnet, daß** die Leuchteneinheit (7, 7a) lösbar am Spiegelkopf (1, 1 a) gehalten ist.

12. Außenrückblickspiegel nach einem der Ansprüche 1 bis 11,
**dadurch gekennzeichnet, daß** das Gehäuse (2) des Spiegelkopfes (1, 1a) eine vorteilhaft durch eine Einbuchtung des Gehäuses (2) des Spiegelkopfes (1, 1a) gebildete Aufnahme (6) für die Leuchteneinheit (7, 7a) aufweist.

13. Außenrückblickspiegel nach einem der Ansprüche 1 bis 12,
**dadurch gekennzeichnet, daß** das Leuchtmittel (31) eine LED ist.

## Claims

1. Exterior rear view mirror for vehicles, in particular for automotive vehicles, having a housing (2) which accommodates at least one lamp unit (7, 7a) which is provided with at least one lamp (31) and at least one reflector (30, 30a), which has at least one opening (39, 40, 44), in the region of which the lamp (31) is situated, the beams (32) of which lamp pass to the outside through a diffusion lens (13), **characterized in that** the reflector (30, 30a) is situated between the lamp (31) and the diffusion lens (13), and **in that** the opening (39, 40, 44) is situated in a wall (37, 38, 43) of the reflector (30, 30a), which wall extends transversely with respect to the diffusion lens (13).

2. Exterior rear view mirror according to Claim 1, **characterized in that** the lamp (31) is arranged on a lamp housing (12).

3. Exterior rear view mirror according to Claim 2, **characterized in that** the lamp housing (12) together with the diffusion lens (13) bounds the sealed lamp unit (7, 7a).

4. Exterior rear view mirror according to Claim 2 or 3, **characterized in that** the lamp housing (12) has at least one projection (27 to 29) which is directed towards the diffusion lens (13) and is advantageously V-shaped in cross section.

5. Exterior rear view mirror according to Claim 4, **characterized in that** the projection (27 to 29) protrudes into at least one depression (35) of the reflector (30, 30a).

6. Exterior rear view mirror according to Claim 5, **characterized in that** the depression (35) has the opening (39, 40).

7. Exterior rear view mirror according to Claim 5 or 6, **characterized in that** the wall (37, 38, 43) having the opening (39, 40, 44) is a side wall of the depression (35).

8. Exterior rear view mirror according to one of Claims 5 to 7, **characterized in that** the projection (27 to 29) of the reflector (30, 30a) is covered towards the diffusion lens (13) by a base (36) of the depression (35).

9. Exterior rear view mirror according to one of Claims 4 to 8, **characterized in that** the projection (27 to 29) has two side walls (33, 34) which are at an angle to each other and on which a respective lamp (31) sits.

10. Exterior rear view mirror according to one of Claims 1 to 9, **characterized in that** the wall (43) having the opening (44) is provided at that end region of the reflector (30a) which is remote from the motor vehicle.

11. Exterior rear view mirror according to one of Claims 1 to 10, **characterized in that** the lamp unit (7, 7a) is held releasably on the mirror head (1, 1a).

12. Exterior rear view mirror according to one of Claims 1 to 11, **characterized in that** the housing (2) of the mirror head (1, 1a) has a receptacle (6) for the lamp unit (7, 7a), which receptacle is advantageously formed by an indentation of the housing (2) of the mirror head (1, 1a).

13. Exterior rear view mirror according to one of Claims 1 to 12, **characterized in that** the lamp (31) is an LED.

## Revendications

1. Rétroviseur extérieur pour véhicules, en particulier pour véhicules automobiles, comprenant un boîtier (2) recevant au moins une unité d'éclairage (7, 7a) munie d'au moins un moyen d'éclairage (31) et d'au moins un réflecteur (30, 30a) présentant un orifice (39, 40, 44) prévu pour y placer le moyen d'éclairage (31) dont les rayonnements (32) sont dirigés vers l'extérieur par l'intermédiaire d'un disque lumineux (13),
**caractérisé en ce que** le réflecteur (30, 30a) se trouve entre le moyen d'éclairage (31) et le disque lumineux (13) et **en ce que** l'orifice (39, 40, 44) se trouve dans une paroi (37, 38, 43) du réflecteur (30, 30a) transversale par rapport au disque lumineux (13).

2. Rétroviseur extérieur selon la revendication 1,
**caractérisé en ce que** le moyen d'éclairage (31) est disposé sur un boîtier d'éclairage (12).

3. Rétroviseur extérieur selon la revendication 2,
**caractérisé en ce que** le boîtier d'éclairage (12) délimite, avec le disque lumineux (13), l'unité d'éclairage (7, 7a) fermée.

4. Rétroviseur extérieur selon la revendication 2 ou 3,
**caractérisé en ce que** le boîtier d'éclairage (12) présente au moins une saillie (27 à 29) dirigée en direction du disque lumineux (13) et ayant avantageusement une forme de V en coupe transversale.

5. Rétroviseur extérieur selon la revendication 4,
**caractérisé en ce que** la saillie (27 à 29) dépasse dans au moins une empreinte (35) du réflecteur (30, 30a).

6. Rétroviseur extérieur selon la revendication 5,
**caractérisé en ce que** l'empreinte (35) présente l'orifice (39, 40).

7. Rétroviseur extérieur selon la revendication 5 ou 6,
**caractérisé en ce que** la paroi (37, 38, 43) présentant l'orifice (39, 40, 44) est une paroi latérale de l'empreinte (35).

8. Rétroviseur extérieur selon l'une des revendications 5 à 7,
**caractérisé en ce que** la saillie (27 à 29) du réflecteur (30, 30a) est recouverte par un fond (36) de l'empreinte (35) par rapport au disque lumineux (13).

9. Rétroviseur extérieur selon l'une des revendications 4 à 8,
**caractérisé en ce que** la saillie (27 à 29) présente deux parois latérales (33, 34) placées angulairement l'une par rapport à l'autre et sur lesquelles repose à chaque fois un moyen d'éclairage (31).

10. Rétroviseur extérieur selon l'une des revendications 1 à 9,
**caractérisé en ce que** la paroi (43) présentant l'orifice (44) est prévue au niveau de l'extrémité du réflecteur (30a) distante du véhicule automobile.

11. Rétroviseur extérieur selon l'une des revendications 1 à 10,
**caractérisé en ce que** l'unité d'éclairage (7, 7a) est maintenue sur la tête du rétroviseur (1, 1a) de manière amovible.

12. Rétroviseur extérieur selon l'une des revendications 1 à 11,
**caractérisé en ce que** le boîtier (2) de la tête du rétroviseur (1, 1a) présente une réception (6) pour l'unité d'éclairage (7, 7a) qui est avantageusement formée par un enfoncement du boîtier (2) de la tête du rétroviseur (1, 1a).

13. Rétroviseur extérieur selon l'une des revendications 1 à 12,
**caractérisé en ce que** le moyen d'éclairage (31) est une LED.
